# EUROPEAN PATENT APPLICATION

(11) **EP 4 542 087 A1**
(43) Date of publication of application: **23.04.2025**
(21) Application number: 24207443.3
(22) Date of filing: 18.10.2024
(51) Int. Cl.: F16H 57/04, B60K 11/02, B60K 1/00, F16H 57/02

(54) **TRANSMISSION ASSEMBLY FOR VEHICLES, AND VEHICLE**

(30) Priority: 19.10.2023 CN 202311359916
(71) Applicant: Valeo eAutomotive Germany GmbH, 91056 Erlangen (DE)
(72) Inventor: SUN, Yawei, 91056 Erlangen (DE); JIN, Yejin, 91056 Erlangen (DE); WANG, Chris-Dongdong, 91056 Erlangen (DE); ZHAO, Wanchao, 91056 Erlangen (DE)
(74) Representative: Valeo Powertrain Systems

(57) **Abstract**

The present disclosure relates to a transmission assembly for a vehicle. The transmission assembly comprises: an assembly housing (1); a gearbox (2) and a motor housing (3), which are arranged in the assembly housing (1) in an integrated manner; a heat exchanger (4); and a lubricating system arranged in the assembly housing (1). The lubricating system comprises: a first fluid passage (S1) between the gearbox (2) and the heat exchanger (4), a second fluid passage (S2) between the motor housing (3) and the heat exchanger (4), and a pump device (P); a lubricating medium is selectively connectable to the first fluid passage (S1) or the second fluid passage (S2) with the aid of the pump device (P), so as to flow into either the gearbox (2) or the motor housing (3), and be delivered to the heat exchanger (4). The present disclosure also relates to a vehicle comprising the above-mentioned transmission assembly.

## Description

### Technical field

The present disclosure relates to a transmission assembly for a vehicle, and a vehicle comprising the transmission assembly.

### Background art

Drive motor systems are used in vehicles, especially electric vehicles, to drive said vehicles. As efforts to reduce the weight of vehicles, make them structurally compact, save energy and reduce emissions continue, E-axle modularization is often used to construct the electric motor, gearbox and inverter, etc. in integrated form. During vehicle operation, the electric motor and gearbox need to be cooled and lubricated via a cooling and lubricating system. In prior art designs, a pump device is used to pump lubricating oil from the gearbox and electric motor to a heat exchanger, wherein lubricating oil at the gearbox and electric motor is sucked in by the pump device from the gearbox side alone, or from two suction sides separately at the same time. However, when the operating conditions of the vehicle are such that it is in a non-level position, for example when the vehicle is travelling on a slope, rounding a bend or accelerating/decelerating, the vehicle body is often tilted, and consequently, lubricating oil at either the gearbox side or the electric motor side moves to the other side. As a result, the liquid level at the corresponding suction side of the pump apparatus falls, an oil suction port is exposed to air, and air suction may even occur, causing cavitation erosion and poor cooling/lubrication. This affects the service life of the vehicle and will also damage the motive power system.

### Summary of the invention

In view of the drawbacks in the prior art, the technical problem to be solved by the present invention is to provide a transmission assembly for a vehicle that is operationally more reliable and has better functionality.

To solve this technical problem, the present invention provides a transmission assembly for a vehicle, comprising: an assembly housing; a gearbox and a motor housing, which are arranged in the assembly housing in an integrated manner; a heat exchanger; and
a cooling and lubricating system arranged in the assembly housing.

The transmission assembly may be and/or comprise a bidirectional oil suction system assembly for a vehicle.

According to an embodiment of the present invention, the cooling and lubricating system comprises: a first fluid passage between the gearbox and the heat exchanger, a second fluid passage between the motor housing and the heat exchanger, and a pump device; and a lubricating medium is selectively connectable to the first fluid passage or the second fluid passage with the aid of the pump device, so as to flow into either the gearbox or the motor housing, and be delivered to the heat exchanger.

Compared with a bidirectional suction pump device in the prior art, the pump device according to the present invention selectively sucks lubricating oil, at a single side, from a position where the liquid level of lubricating oil is sufficiently high; even if the liquid level of lubricating oil falls at one side due to tilting of the vehicle during travel, the problem of insufficient suction pressure due to a drop in liquid level at the suction side of the pump device will not occur, so damaging cavitation erosion and poor cooling/lubrication in the pump device are avoided, thereby ensuring reliable and stable running of the motive power system.

The electric drive assembly system according to the present disclosure may further have one or more of the following features individually or in combination.

According to an embodiment of the present disclosure, the transmission assembly comprises a valve device, the valve device comprising a valve body, and the valve device being used to switch between the first fluid passage and the second fluid passage, wherein the first fluid passage connects the gearbox connected to a suction side of the pump device and the heat exchanger connected to a pressure side of the pump device; and the second fluid passage connects the motor housing connected to a suction side of the pump device and the heat exchanger connected to a pressure side of the pump device.

According to an embodiment of the present disclosure, the pump device is a bidirectionally reversible suction pump comprising a first end and a second end; when the pump device runs in a first direction, the first end is a suction side and the second end is a pressure side; when the pump device runs in a second direction opposite to the first direction, the second end is a suction side and the first end is a pressure side.

The pump device according to this embodiment is able to switch its suction side and pressure side between the first end and second end thereof, thereby realizing bidirectionally reversible suction.

According to an embodiment of the present disclosure, the transmission assembly comprises a sensor device for detecting a running state of the vehicle, wherein the pump device is controlled to run in the first direction or second direction with the aid of a sensing signal generated by the sensor device.

According to an embodiment of the present disclosure, the running state of the vehicle comprises a tilt state of the vehicle and/or an acceleration of the vehicle.

According to an embodiment of the present disclosure, the transmission assembly comprises a pump drive motor for driving the pump device to run, and the pump device is controlled to run in the first direction or second direction according to a current strength of the pump drive motor.

When the current strength is lower than a set threshold, this means that pump idling attributable to a drop in liquid level has occurred, and the running direction of the pump drive motor should be adjusted.

Thus, the running direction of the pump drive motor can be flexibly adjusted according to the current running state of the vehicle, so as to select a suitable suction side/pressure side configuration in a timely manner, to reliably avoid air suction by the pump device.

According to an embodiment of the present disclosure, the valve device comprises multiple one-way valves.

According to an embodiment of the present disclosure, the multiple one-way valves have a common valve body.

According to an embodiment of the present disclosure, the multiple one-way valves comprise:
a first one-way valve arranged between the gearbox and the first end of the pump device, the first one-way valve allowing fluid to flow in a direction from the gearbox to the first end;
a second one-way valve arranged between the motor housing and the second end of the pump device, the second one-way valve allowing fluid to flow in a direction from the motor housing to the second end, and the first end and the second end of the pump device also being separately connected to the heat exchanger;
a third one-way valve arranged between the second end of the pump device and the heat exchanger, the third one-way valve allowing fluid to flow in a direction from the second end to the heat exchanger; and
a fourth one-way valve arranged between the first end of the pump device and the heat exchanger, the fourth one-way valve allowing fluid to flow in a direction from the first end to the heat exchanger.

In an alternative embodiment, the pump device is a bidirectional pump comprising a first end and a second end; by means of the valve device, the first end is connected as a suction side to either the gearbox or the motor housing, and the second end is connected as a pressure side to the heat exchanger.

According to an embodiment of the present disclosure, a pump drive motor, the pump device and the valve device are together fixed to the assembly housing at the same time by means of a bolt.

According to an embodiment of the present disclosure, the pump device comprises a pump rotor and a pump cover, the pump drive motor uses a pump motor drive shaft thereof to drive the pump rotor, and the pump cover is fixedly connected to the pump drive motor and the valve body separately, wherein sealing rings are provided between the pump cover and the pump drive motor and between the pump cover and the valve body.

According to an embodiment of the present disclosure, the valve device comprises a reversing valve. Especially preferably, the valve device comprises a solenoid valve.

A signal for switching the reversing valve can be transmitted to the reversing valve directly by means of a control device, the signal being based on a running state of the vehicle, including a tilt state of the vehicle and/or an acceleration of the vehicle; optionally, the signal is based on the rotation direction of the pump drive motor.

The present invention further provides a vehicle, comprising the transmission assembly described above.

### Brief description of the drawings

In order to more clearly explain the technical solutions of embodiments of the present invention, the drawings of the embodiments are briefly described below, wherein it is evident that the drawings in the following description only relate to some embodiments of the present invention, rather than limiting the present invention.
Fig. 1 shows schematically a partial 3D drawing of a transmission assembly according to the present invention.
Fig. 2 shows schematically a partial 3D drawing of the transmission assembly shown in Fig. 1, viewed from another angle.
Fig. 3 shows schematically a partial 3D drawing of components of the transmission assembly shown in Fig. 1.
Fig. 4 shows schematically a partial 3D drawing of the components shown in Fig. 3.
Fig. 5 shows schematically another partial 3D drawing of the components shown in Fig. 3.
Fig. 6 shows schematically a partial exploded drawing of the components shown in Fig. 3.
Fig. 7 shows schematically a partial sectional drawing of the components shown in Fig. 3.
Fig. 8 shows a schematic pathway diagram of a transmission assembly according to a first embodiment of the present invention.
Fig. 9 shows schematically a first operating condition state of the pathway diagram shown in Fig. 7.
Fig. 10 shows schematically a second operating condition state of the pathway diagram shown in Fig. 7.
Fig. 11 shows a schematic pathway diagram of a transmission assembly according to a second embodiment of the present invention; and
Fig. 12 schematically shows components of the transmission assembly according to the second embodiment of the present invention.

### Detailed description of the invention

The technical solutions in embodiments of the present invention will be described clearly and completely below with reference to the drawings in embodiments of the present invention. Obviously, the embodiments described are only some, not all, of the embodiments of the present invention. All other embodiments obtained by those skilled in the art based on embodiments of the present invention without inventive effort shall fall within the scope of protection of the present invention.

The expression "an embodiment" or "embodiment" as used herein means a specific feature, structure or characteristic that may be included in at least one implementation of the present invention. In the description of the present invention, it should be understood that orientational or positional relationships indicated by the terms "up", "down", "left", "right", "top", "bottom", etc. are based on the orientational or positional relationships shown in the drawings, and are merely intended to facilitate and simplify the description of the present invention, rather than indicating or implying that the apparatus or element referred to must have a specific orientation or be constructed and operated in a specific orientation, and therefore should not be construed as limiting the present invention.

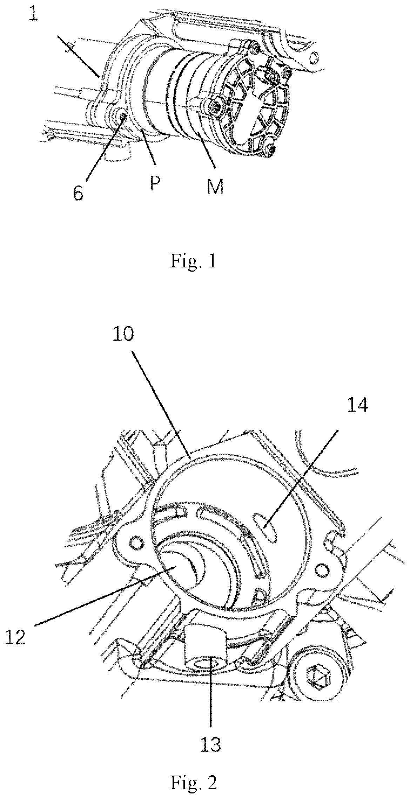

Fig. 1 shows schematically a transmission assembly, comprising an assembly housing 1, and further comprising a gearbox and a motor housing which are not shown in the figure but arranged in the assembly housing 1 in an integrated manner. The transmission assembly further comprises a cooling and lubricating system, which is not shown in detail in the figure but arranged in the assembly housing 1. Lubricating oil flows through the gearbox and the motor housing and into an input end of a heat exchanger 4 via the lubricating system.

When the vehicle comprising the transmission assembly is in a first operating condition of normal travel, a body of the vehicle remains substantially level, and correspondingly, a liquid level of lubricating oil remains substantially level. In this case, a suction port of a pump device for pumping lubricating oil is submerged below the liquid level, and is thus able to suck lubricating oil normally. However, in a second operating condition which is abnormal, the body of the vehicle is tilted, and lubricating oil correspondingly moves towards the motor housing side, causing the liquid level at the gearbox side to fall, so that the pump device is unable to suck lubricating oil from this region with sufficient liquid intake pressure.

Figs. 1 and 2 show partial schematic drawings of a transmission assembly according to a first embodiment of the present invention. The transmission assembly comprises an assembly housing 1, as well as a gearbox 2 and a motor housing 3 which are not specifically shown in Figs. 1 and 2, wherein the gearbox and the motor housing are arranged in the assembly housing 1 in an integrated manner.

A module consisting of a valve device V, a pump device P and a pump drive motor M is further installed in the assembly housing 1, the module having a substantially cylindrical profile overall. For this purpose, the assembly housing 1 comprises an integrally formed valve interface 10, the valve interface protruding outwards from the assembly housing 1 and having a cylindrical wall adapted to an outer contour of the valve device V in the module described above, thereby forming a shape-fitted connection with the valve device V. A gearbox oil hole 12 leading to the gearbox 2 is formed at an end opening of the cylindrical wall of the valve interface 10, and a motor housing oil hole 13 leading to the motor housing 3 and a heat exchanger hole 14 leading to the heat exchanger 4 are formed in a circumferential face of the cylindrical wall, wherein the motor housing oil hole 13 and the heat exchanger hole 14 are offset from each other in an axial direction.

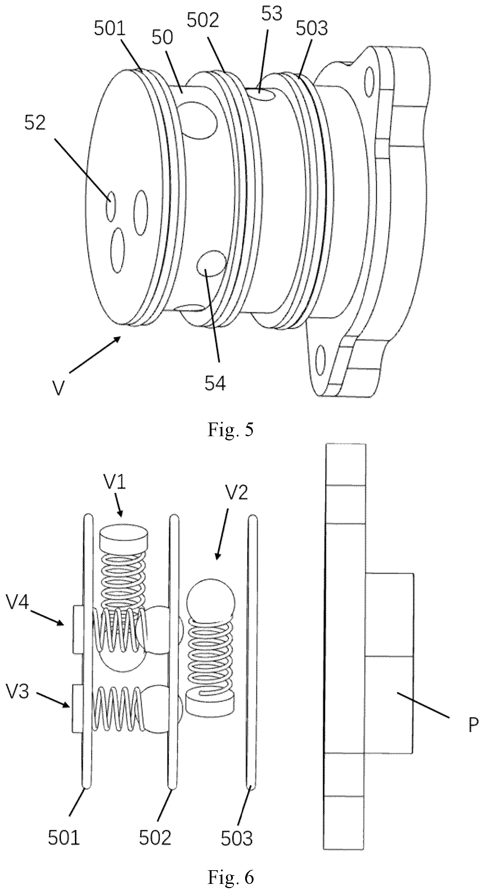

The valve device V comprises a valve body 50, and multiple one-way valves are arranged in the valve body 50. For clarity, the valve body 50 is hidden in Fig. 6, and only four one-way valves arranged therein are shown schematically, specifically a first one-way valve V1, a second one-way valve V2, a third one-way valve V3 and a fourth one-way valve V4. Multiple sealing means extending parallel to each other are arranged in the axial direction at the periphery of the valve device V; for example, in this embodiment, three sealing rings extending parallel to each other are arranged, specifically a first valve sealing ring 501, a second valve sealing ring 502 and a third valve sealing ring 503. A gearbox valve hole 52 connectable to the first one-way valve V1 is formed on an end face of the valve body 50 that faces the valve interface 10 of the assembly housing 1, a heat exchanger valve hole 54 connectable to the third one-way valve V3 and the fourth one-way valve V4 is formed between the first valve sealing ring 501 and the second valve sealing ring 502, and an electric motor valve hole 53 connectable to the second one-way valve V2 is formed between the second valve sealing ring 502 and the third valve sealing ring 503.

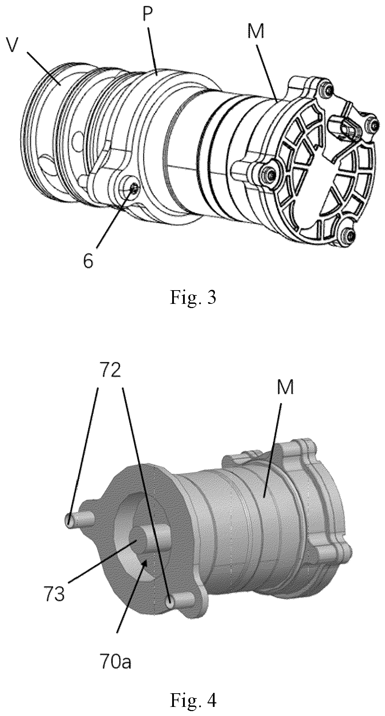

In this embodiment, the pump device P is formed as a rotor pump commonly seen in the prior art, which is fixedly connected to the valve device V and also fixedly connected to the pump drive motor M used to drive the operation of the pump device P. The pump drive motor M, the pump device P and the valve device V are together fixed to the assembly housing 1. As shown in Figs. 3 - 7, the pump device P comprises a pump rotor 70, a pump cover 71, a first pump sealing ring 504 and a second pump sealing ring 505. The pump rotor is installed in a rotor cavity 70a, and driven by a pump motor drive shaft 73 of the pump drive motor M; the pump cover 71 is connected to the pump drive motor M at one side in a positionally fixed manner, the fixed connection being realized with the aid of hollow pins 72, and the pump cover 71 is fixedly connected at the other side to the valve body 50 of the valve device V. The first pump sealing ring 504 is provided between the pump cover 71 and the valve body 50, and the second pump sealing ring 505 is provided between the pump cover 71 and the pump drive motor M. As shown in Figs. 1 and 3, the pump drive motor M, the pump cover 71 and the valve body 50 are together fixed to the assembly housing 1 at the same time by bolts 6.

In Fig. 6, when the valve device V is fitted into the valve interface 10, a gap between a circumferential face of the valve device V and a circumferential wall of the valve interface 10 is divided by the sealing rings into multiple annular channels which are parallel in the axial direction, such that the gearbox valve hole 52 is connected to the gearbox oil hole 12, the electric motor valve hole 53 is connected to the motor housing oil hole 13, and the heat exchanger valve hole 54 is connected to the heat exchanger hole 14.

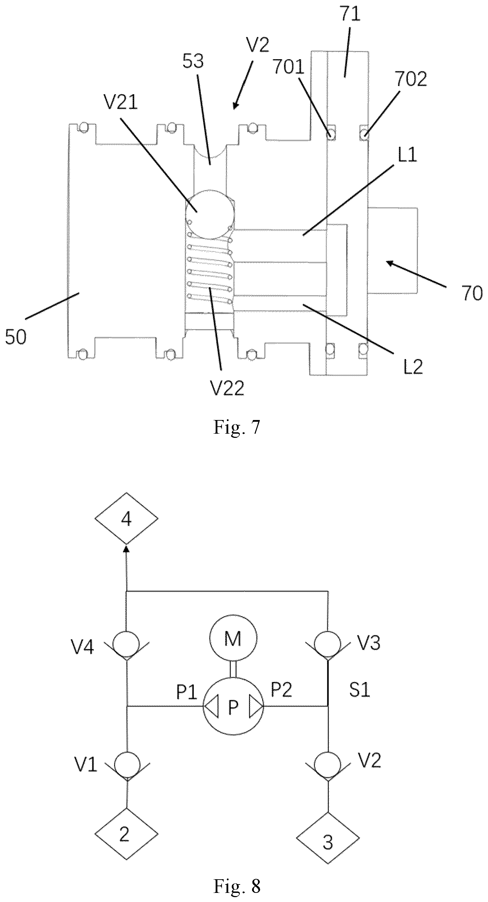

Fig. 7 is used to explain cooperation between the one-way valves and the pump device P demonstratively. The second one-way valve V2 is arranged in the valve body 50, and comprises a valve core V21 formed as a sphere, and a spring member V22 which supports the valve core V21 in the valve body 50 in a preloaded manner. At the side of the valve core V21 that faces away from the spring member V22, the valve body 50 leads to the electric motor valve hole 53 on the circumferential face; and a first passage L1 and a second passage L2 connected to a second end of the pump device P separately extend out laterally from the electric motor valve hole 53. When the pump device P runs in a first direction R1 under the action of the pump drive motor M, the second end of the pump device is a pressure side, and the first passage L1 and the second passage L2 have positive pressure, so the valve core V21 seals the electric motor valve hole 53; when the pump device P runs in a second direction R2 opposite to the first direction R1 under the action of the pump drive motor M, the second end of the pump device is a suction side, and the first passage L1 and the second passage L2 have negative pressure, so the valve core V21 correspondingly presses downwards against the preloading force of the spring member V22, releasing the pathway between the first passage L1 and the electric motor valve hole 53, and thereby allowing lubricating oil in the motor housing 3 to be sucked into the pump device P.

A Figs. 8-10 show schematic pathway diagrams of the transmission assembly according to the first embodiment of the present invention.

As shown in Fig. 8, the pump device P comprises a first end P1 and a second end P2, wherein the first end P1 of the pump device P is separately connected to the gearbox 2 and the heat exchanger 4, and the second end P2 of the pump device P is separately connected to the motor housing 3 and the heat exchanger 4. The first one-way valve V1 is provided between the first end P1 of the pump device P and the gearbox 2; the fourth one-way valve V4 is provided between the first end P1 and the heat exchanger 4. The second one-way valve V2 is provided between the second end P2 of the pump device P and the motor housing 3; the third one-way valve V3 is provided between the second end P2 and the heat exchanger 4. As shown in Fig. 8, the first one-way valve V1 allows fluid to flow from the gearbox 2 towards the first end P1; the second one-way valve V2 allows fluid to flow from the motor housing 3 towards the second end P2; the third one-way valve V3 allows fluid to flow from the second end P2 towards the heat exchanger 4; and the fourth one-way valve V4 allows fluid to flow from the first end P1 towards the heat exchanger 4.

Under the action of the pump drive motor M, the pump device P is able to run in the first direction R1 and in the second direction R2 opposite to the first direction R1. The running direction of the pump drive motor M can be controlled by means of a control device which is not shown, wherein the control device controls the running direction of the pump drive motor M on the basis of a sensing signal generated by a sensor device or according to a current strength of the pump drive motor M, wherein the sensing signal is related to a running state of the vehicle, such as a vehicle tilt state and/or acceleration direction, etc.

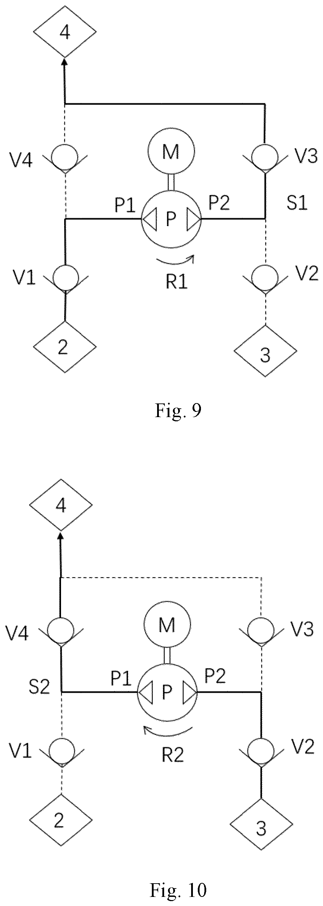

As shown in Fig. 9, in a first operating condition which is normal, the body of the vehicle remains substantially level, and there is a sufficiently high liquid level of lubricating oil in the gearbox 2. The pump device P runs normally in the first direction R1 under the driving action of the pump drive motor M, wherein the first end P1 of the pump device P is a suction side, and the second end P2 is a pressure side. In this case, the first one-way valve V1 opens, the second one-way valve V2 closes, the third one-way valve V3 opens, and the fourth one-way valve V4 closes, thereby releasing a first fluid passage S1 connecting the gearbox 2 and the heat exchanger 4; at this time, the pump device P sucks lubricating oil from the gearbox 2, with the first end P1 as the suction side, and then delivers this oil to the heat exchanger 4 via the first fluid passage S 1.

As shown in Fig. 10, in a second operating condition which is abnormal, the body of the vehicle is tilted, and lubricating oil surges into the motor housing 3. Based on a sensing signal generated by a sensor device for detecting a vehicle tilt state and/or acceleration, or according to a current strength of the pump drive motor M, the control device controls the pump device P to run in the second direction R2 opposite to the first direction R1. At this time, the second end P2 of the pump device P is a suction side, and the first end P1 is a pressure side. In this case, the second one-way valve V2 opens, the first one-way valve V1 closes, the fourth one-way valve V4 opens, and the third one-way valve V3 closes, thereby releasing a second fluid passage S2 connecting the motor housing 3 and the heat exchanger 4; at this time, the pump device P sucks lubricating oil from the motor housing 3, with the second end P2 as the suction side, and then delivers this oil to the heat exchanger 4 via the second fluid passage S2.

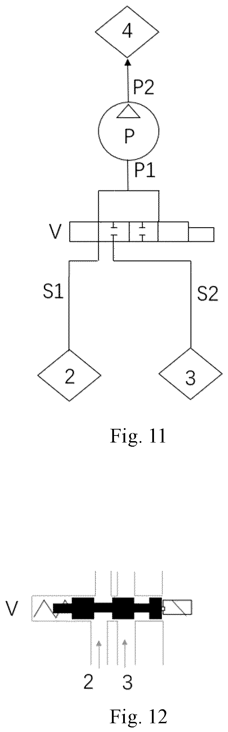

Figs. 11 and 12 schematically show a transmission assembly according to a second embodiment of the present invention.

Unlike the first embodiment above, the pump device P is formed as a bidirectional pump, comprising a first end P1 acting as a suction side, and a second end P2 acting as a pressure side. The valve device V comprises a reversing valve, preferably a solenoid valve. The gearbox 2 and the motor housing 3 are optionally connected to the first end P1 of the pump device P by means of the pump device P formed as a reversing valve, and the second end P2 of the pump device P is connected to the heat exchanger 4. Through movement of the reversing valve, either the gearbox 2 or the motor housing 3 can be connected to the first end P1 of the pump device P.

Fig. 11 schematically shows the transmission assembly in a first operating condition of normal operation. By means of the reversing valve, a first fluid passage S1 connecting the gearbox 2 and the heat exchanger 4 is released, and the pump device P sucks lubricating oil from the gearbox 2 and delivers this oil to the heat exchanger 4 via the first fluid passage S1. As shown in Fig. 12, the valve core releases the passage connecting the gearbox 2, and closes a passage connecting the motor housing 3.

When the vehicle is in a second operating condition which is abnormal, the control device causes the reversing valve to shift with the aid of a sensor device and/or a current strength of the pump drive motor, thereby releasing a second fluid passage S2 connecting the motor housing 3 and the heat exchanger 4, and the pump device P sucks lubricating oil from the motor housing 3 and delivers this oil to the heat exchanger 4 via the second fluid passage S2.

According to another aspect of the present disclosure, a vehicle is provided. The vehicle includes an electric drive assembly system as previously described. The vehicle may be an electrified vehicle, such as a battery electric vehicle (BEV), a hybrid electric vehicle (HEV), a plug-in hybrid electric vehicle (PHEV), a range extended EV and a fuel cell electric vehicle (FCEV). The vehicle may also be a hydrogen-powered vehicle.

Certain features, structures or characteristics in one or more embodiments of the present application may be combined appropriately.

Unless otherwise defined, all of the terms (including technical and scientific terms) used herein have the same meanings as those commonly understood by those skilled in the art. It should also be understood that terms such as those defined in a common dictionary should be interpreted as having the same meanings as they have in the context of the related art, rather than being interpreted in an idealized or extremely formalized sense, unless expressly so defined herein.

The above is a description of the present invention and should not be regarded as limiting it. Although certain exemplary embodiments of the present invention have been described, those skilled in the art will readily understand that many modifications may be made to the exemplary embodiments without departing from the novel teaching and advantages of the present invention. Therefore, all such modifications are intended to be included within the scope of the present invention as defined by the claims. It should be understood that the above is a description of the present invention and the present invention should not be deemed to be limited to the specific embodiments disclosed herein; in addition, modifications made to the disclosed embodiments and other embodiments are intended to be included within the scope of the present invention.

### Key to the drawings:

- 1: Assembly housing
- 10: Valve interface
- 12: Gearbox oil hole
- 13: Motor housing oil hole
- 14: Heat exchanger hole
- 2: Gearbox
- 3: Motor housing
- 4: Heat exchanger
- V: Valve device
- V1: First one-way valve
- V2: Second one-way valve
- V3: Third one-way valve
- V4: Fourth one-way valve
- 50: Valve body
- 501: First valve sealing ring
- 502: Second valve sealing ring
- 503: Third valve sealing ring
- 52: Gearbox valve hole
- 53: Electric motor valve hole
- 54: Heat exchanger valve hole
- 6: Bolt
- 70: Pump rotor
- 701: First pump sealing ring
- 702: Second pump sealing ring
- 70a: Rotor cavity
- 71: Pump cover
- 72: Hollow pin
- 73: Pump motor drive shaft.

## Claims

1. A transmission assembly for a vehicle, the transmission assembly comprising:
an assembly housing (1);
a gearbox (2) and a motor housing (3), which are arranged in the assembly housing (1) in an integrated manner;
a heat exchanger (4); and
a cooling and lubricating system arranged in the assembly housing (1),
wherein the cooling and lubricating system comprises:
a first fluid passage (S1) between the gearbox (2) and the heat exchanger (4), a second fluid passage (S2) between the motor housing (3) and the heat exchanger (4), and
a pump device (P),
a lubricating medium being selectively connectable to the first fluid passage (S1) or the second fluid passage (S2) with the aid of the pump device (P), so as to flow into either the gearbox (2) or the motor housing (3), and be delivered to the heat exchanger (4).

2. The transmission assembly according to claim 1, wherein
the transmission assembly comprises a valve device (V), the valve device (V) comprising a valve body (50), and the valve device (V) being used to switch between the first fluid passage (S1) and the second fluid passage (S2), wherein the first fluid passage (S1) connects the gearbox (2) connected to a suction side of the pump device (P) and the heat exchanger (4) connected to a pressure side of the pump device (P); and the second fluid passage (S2) connects the motor housing (3) connected to a suction side of the pump device (P) and the heat exchanger (4) connected to a pressure side of the pump device (P).

3. The transmission assembly according to claim 1 or 2, wherein
the pump device (P) is a bidirectionally reversible suction pump comprising a first end (P1) and a second end (P2); when the pump device (P) runs in a first direction, the first end (P1) is a suction side and the second end (P2) is a pressure side; when the pump device (P) runs in a second direction opposite to the first direction, the second end (P2) is a suction side and the first end (P1) is a pressure side.

4. The transmission assembly according to claim 3, wherein
the transmission assembly comprises a sensor device for detecting a running state of the vehicle, wherein the pump device (P) is controlled to run in the first direction or second direction with the aid of a sensor signal generated by the sensor device.

5. The transmission assembly according to claim 4, wherein
the running state of the vehicle comprises a tilt state of the vehicle and/or an acceleration of the vehicle.

6. The transmission assembly according to one of the claims 3 to 5, wherein
the transmission assembly comprises a pump drive motor (M) for driving the pump device to run, and the pump device (P) is controlled to run in the first direction or second direction according to a rotation direction of the pump drive motor (M).

7. The transmission assembly according to one of the claims 2 to 6, wherein
the valve device (V) comprises multiple one-way valves.

8. The transmission assembly according to claim 7, wherein
the multiple one-way valves have a common valve body (50).

9. The transmission assembly according to claim 7 or 8, wherein
the multiple one-way valves comprise:
a first one-way valve (V1) arranged between the gearbox (2) and the first end (P1) of the pump device (P), the first one-way valve (V1) allowing fluid to flow in a direction from the gearbox (2) to the first end (P1);
a second one-way valve (V2) arranged between the motor housing (3) and the second end (P2) of the pump device (P), the second one-way valve (V2) allowing fluid to flow in a direction from the motor housing (3) to the second end (P2), and the first end (P1) and the second end (P2) of the pump device (P) also being separately connected to the heat exchanger (4);
a third one-way valve (V3) arranged between the second end (P2) of the pump device (P2) and the heat exchanger (4), the third one-way valve (V3) allowing fluid to flow in a direction from the second end (P2) to the heat exchanger (4); and
a fourth one-way valve (V4) arranged between the first end (P1) of the pump device (P) and the heat exchanger (4), the fourth one-way valve (V4) allowing fluid to flow in a direction from the first end (P1) to the heat exchanger (4).

10. The transmission assembly according to claim 2, wherein
the pump device (P) is a bidirectional pump comprising a first end (P1) and a second end (P2); by means of the valve device, the first end (P1) is connected as a suction side to either the gearbox (2) or the motor housing (3), and the second end (P2) is connected as a pressure side to the heat exchanger (4).

11. The transmission assembly according to claim 10, wherein
a pump drive motor (M), the pump device (P) and the valve device (V) are together fixed to the assembly housing (1) at the same time by means of a bolt (6).

12. The transmission assembly according to claim 11, wherein
the pump device (P) comprises a pump rotor (70) and a pump cover (71), the pump drive motor (M) uses a pump motor drive shaft (73) thereof to drive the pump rotor (70), and the pump cover (71) is fixedly connected to the pump drive motor (M) and the valve body (50) separately, wherein sealing rings are provided between the pump cover (71) and the pump drive motor (M) and between the pump cover (71) and the valve body (50).

13. The transmission assembly according to one of the claims 10 to 13, wherein
the valve device comprises a reversing valve.

14. A vehicle, comprising the transmission assembly according to any one of claims 1-13.
